# FASCICULE DE BREVET EUROPEEN

(11) **EP 1 964 363 B1**
(45) Date de publication et mention de la délivrance du brevet: **04.05.2016**
(21) Numéro de dépôt: 06842173.4
(22) Date de dépôt: 14.12.2006
(51) Int. Cl.: H04L 29/06

(54) **PROCÉDÉ DE TRANSFERT DE FLUX DE COMMUNICATION**
VERFAHREN ZUM TRANSFERIEREN VON KOMMUNIKATIONSSTRÖMEN
METHOD OF TRANSFERRING COMMUNICATION STREAMS

(30) Priorité: 16.12.2005 FR 0553922
(43) Date de publication de la demande: 03.09.2008
(73) Titulaire: Orange, 75015 Paris (FR)
(72) Inventeur: PROVOST, Hervé, F-38170 Seyssinet-Pariset (FR); BERENGUER, Marc, F-38420 Revel (FR); VIROULAUD, Laurent, F-38000 Grenoble (FR)
(86) Numéro de dépôt international: PCT/FR2006/051363
(87) Numéro de publication internationale: WO 2007/071873

(56) Documents cités:
- WO-A-03/046747
- US-A1- 2003 185 375
- WANG H. J. ET AL.: "A signaling system using lightweight call sessions" INFOCOM 2000. NINETEENTH ANNUAL JOINT CONFERENCE OF THE IEEE COMPUTER AND COMMUNICATIONS SOCIETIES. PROCEEDINGS. IEEE TEL AVIV, ISRAEL 26-30 MARCH 2000, PISCATAWAY, NJ, USA,IEEE, US, vol. 2, 26 mars 2000 (2000-03-26), pages 697-706, XP010376159 ISBN: 0-7803-5880-5
- OHTA K. ET AL.: "Adaptive terminal middleware for session mobility" MULTIMEDIA SIGNAL PROCESSING, 2002 IEEE WORKSHOP ON 9-11 DEC. 2002, PISCATAWAY, NJ, USA,IEEE, 19 mai 2003 (2003-05-19), pages 394-399, XP010642403 ISBN: 0-7803-7713-3
- SPARKS R. ET AL.: "draft-ietf-sip-cc-transfer-01: SIP Call Control - Transfer" SIPPING WG INTERNET DRAFT, 11 février 2003 (2003-02-11), pages 1-32, XP002250289
- "Corporate telecommunication Networks (CN); Signalling interworking between QSIG and SIP; Call Transfer; ETSI TS 102 392" ETSI STANDARDS, EUROPEAN TELECOMMUNICATIONS STANDARDS INSTITUTE, SOPHIA-ANTIPO, FR, vol. ECMATC32, no. V111, février 2005 (2005-02), pages 1-29, XP014027355 ISSN: 0000-0001

## Description

L'invention concerne un procédé de transfert de flux de communication.

Le transfert de flux de communication, plus communément appelé transfert d'appel, consiste à substituer à un premier flux de communication, établi entre un premier terminal et un deuxième terminal, un deuxième flux de communication, établi entre un troisième terminal et le premier terminal.

Dans le domaine des télécommunications, il est connu d'utiliser des commutateurs spécialisés, de type PABX (Private Automatic Branch Exchange) pour opérer un tel transfert. Cependant ces équipements ne peuvent transférer des communications que dans l'environnement confiné au réseau local qui se trouve en aval de cet équipement. En outre, ces équipements ne permettent pas d'effectuer le transfert d'une communication en visiophonie vers une communication en téléphonie simple, ou vice-versa.

Le document de Wang H. J. et al., intitulé a signaling system using lightweight call sessions", décrit notamment un scénario permettant à un utilisateur de transférer un appel établi avec un téléphone cellulaire (cell phone) vers un téléphone IP (laptop IP phone) choisi par cette personne.

Le document d'Ohta K. et al, intitulé "adaptative terminal middleware for session mobility" décrit notamment un scénario de transfert d'un appel établi au moyen des périphériques internes (caméra, écran, microphone) d'un terminal vers des équipements externes (télévision, etc) se substituant respectivement ces périphériques internes lorsque l'utilisateur se trouve à proximité de ces équipements.

L'invention a pour but de fournir une solution générique de transfert de flux de communication, applicable à un transfert vers n'importe quel terminal de télécommunication apte à établir au moins un flux de communication et vers n'importe quel réseau de télécommunication.

Dans ce but, l'invention a pour objet, selon un premier aspect, un procédé selon la revendication 1.

L'établissement d'une voie de communication supplémentaire (deuxième voie), servant de voie auxiliaire, permet l'envoi de données spécifiant la demande de transfert et l'établissement du deuxième flux de communication en réponse à et conformément à cette demande. Ce procédé de transfert de flux de communication est applicable à tout type de transfert, quel que soit le type de terminal présent, quel que soit le type de flux de communication établi, quels que soit les réseaux de télécommunication, que les premier et deuxième réseaux de télécommunication soient distincts ou identiques, notamment du fait de la prise en compte des capacités respectives des premier et troisième terminaux.

Selon un mode de réalisation, la deuxième voie de communication est indépendante de la première voie de communication et du premier flux de communication. De cette manière, la procédure d'établissement de la deuxième voie de communication ne perturbe pas la communication établie entre le premier et le deuxième terminal via la première voie de communication. Cette communication peut donc se poursuivre jusqu'à l'établissement du deuxième flux de communication, voire même postérieurement à cet établissement si le terminal supporte deux flux simultanés.

Dans l'invention, le premier flux de communication peut être de plusieurs types: flux téléphonique, flux visiophonique, flux de données, ou flux multimédia, et le deuxième flux de communication peut avantageusement être d'un type différent de celui du premier flux de communication. Le procédé selon l'invention est donc applicable à un transfert d'un flux téléphonique vers un flux visiophonique ou vice-versa.

De préférence au moins une partie des données destinées à être véhiculées via le deuxième flux et au moins une partie des données destinées à être véhiculées via le premier flux sont d'un même type, notamment du type audio ou du type vidéo.

Selon un mode de réalisation, le procédé selon l'invention comprend une étape de détermination de paramètres de communication, notamment norme de codage audio et/ou vidéo, en vue de la mise en oeuvre dudit flux de communication entre le premier terminal et le troisième terminal. La nature du flux de communication est dépendante en particulier des capacités respectives des premier et troisième terminaux, ces capacités déterminant les paramètres de communication possibles pour le flux de communication à établir. Parmi les paramètres de communication possibles seront sélectionnés de préférence les paramètres permettant d'établir une communication de même nature (audio et/ou vidéo et/ou données) que celle du premier flux, et, optionnellement, de même niveau de qualité.

Selon un mode de réalisation, le procédé selon l'invention comprend une étape d'envoi, au premier terminal, à travers la deuxième voie de communication, de données d'authentification à utiliser lors l'établissement dudit flux de communication entre le premier terminal et le troisième terminal. L'étape d'établissement du flux de communication est dans ce cas complètement transparente pour un utilisateur du premier terminal et peut s'effectuer sans intervention de cet utilisateur.

Selon un mode de réalisation, le procédé selon l'invention comprend une étape consistant à envoyer au premier terminal, via la deuxième voie de communication, des paramètres de connexion nécessaires à l'établissement du deuxième flux. Il s'agit par exemple de paramètres de connexion à un serveur via lequel le deuxième flux doit être établi. Le premier terminal est donc en mesure d'établir le deuxième flux de communication avec n'importe quel troisième terminal sur la base de ces paramètres.

Dans un mode de réalisation particulier, le réseau de communication utilisé pour établir la première voie de communication et le premier flux est différent du réseau de communication utilisé pour établir la troisième voie de communication et le deuxième flux. L'invention est donc adaptée à tout type de transfert, y compris des transferts d'un réseau de type RTC vers un réseau IP ou vice versa.

De préférence les premier ou deuxième réseaux sont interconnectés entre eux de manière à ce que les paramètres de connexion au troisième terminal puissent être obtenus à partir d'un quelconque des terminaux accédant au premier réseau.

Dans un mode de réalisation, la deuxième voie de communication est établie par l'intermédiaire d'un relais de communication entre le premier terminal et le deuxième terminal. Un tel relais de communication est avantageusement accessible et partagé par plusieurs terminaux du premier réseau de communication, et ainsi utilisable par ces terminaux pour la gestion et la mise en oeuvre de transferts d'appel à la demande de ces terminaux.

De préférence, le relais de communication précité accède à la fois au premier et au deuxième réseau de manière à ce qu'il soit en mesure de communiquer avec l'un quelconque des premier, deuxième et troisième terminaux pour la mise en oeuvre du transfert d'appel ou de manière à ce qu'il puisse prendre en charge l'obtention des paramètres de connexion au troisième terminal suite à la réception d'une demande de transfert du deuxième terminal.

Dans un mode de réalisation particulier, l'étape d'interruption du premier flux est postérieure à l'étape d'établissement du deuxième. Le procédé permet donc de garantir une continuité de communication, le premier flux pouvant temporairement coexister avec le deuxième flux.

L'invention a également pour objet un terminal selon la revendication 8.

Corrélativement, l'invention a également pour objet un terminal selon la revendication 9.

L'invention a également pour objet un module selon la revendication 7.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un système permettant la mise en oeuvre de l'invention;
- la figure 2 est un organigramme d'un mode de réalisation du procédé selon l'invention.

Par terminal, on entend ici tout type d'appareil matériel ou d'assemblage logiciel et matériel permettant d'établir un flux de communication avec un autre terminal distant, par exemple un téléphone classique RTC, un téléphone cellulaire, un logiciel s'exécutant sur un micro-ordinateur connecté à au moins un réseau de télécommunication, un matériel de visioconférence sur réseau IP, etc.

Par capacités d'un terminal, on entend ici l'ensemble des paramètres déterminant les possibilités du terminal relativement à l'établissement de sessions de communication. Ces paramètres définissent notamment:
- les protocoles d'établissement de communication supportés (H320, H323, SIP, GSM, RTC, ...),
- les algorithmes d'encodage et/ou de décodage de flux audio et/ou vidéo supportés,
- les médias de télécommunication proposés par le terminal: audio seulement, vidéo seulement (temps réel, streaming, etc), audio et vidéo, etc,
- les caractéristiques de traitement des flux: temps de latence minimum requis par le réseau, débits supportés, perte de paquets toléré, vitesse de connexion, etc,
- les réseaux auxquels il peut être connecté (RTC, GSM, réseau de transmission de paquets, etc),
- les paramètres de connexions utiles pour joindre le terminal (droits d'accès, ports IP à ouvrir sur les pare-feux dynamiques, numéro de téléphone, adresse IP, etc).

Dans le contexte de l'invention, on considère deux catégories de flux de communication: les flux utiles et les flux de services. Un flux utile est un flux servant à la télécommunication proprement dite; il peut s'agir par exemple d'un flux téléphonique, d'un flux visiophonique, d'un flux de données ou plus généralement d'un flux multimédia; le flux utile peut donc transporter différents types de données: son, image, ou autres données. Un flux de service est, dans le contexte de l'invention, un flux utilisé pour effectuer et gérer le transfert du flux utile.

Un flux de service et un flux utile peuvent être transportés par un même réseau (par exemple via un réseau IP, utilisant le service de transport de données en mode paquet d'un réseau de téléphonie de troisième génération UMTS, Universal Mobile Telecommunication System) ou par des réseaux de type différents (par exemple un réseau IP sur ADSL et RTC).

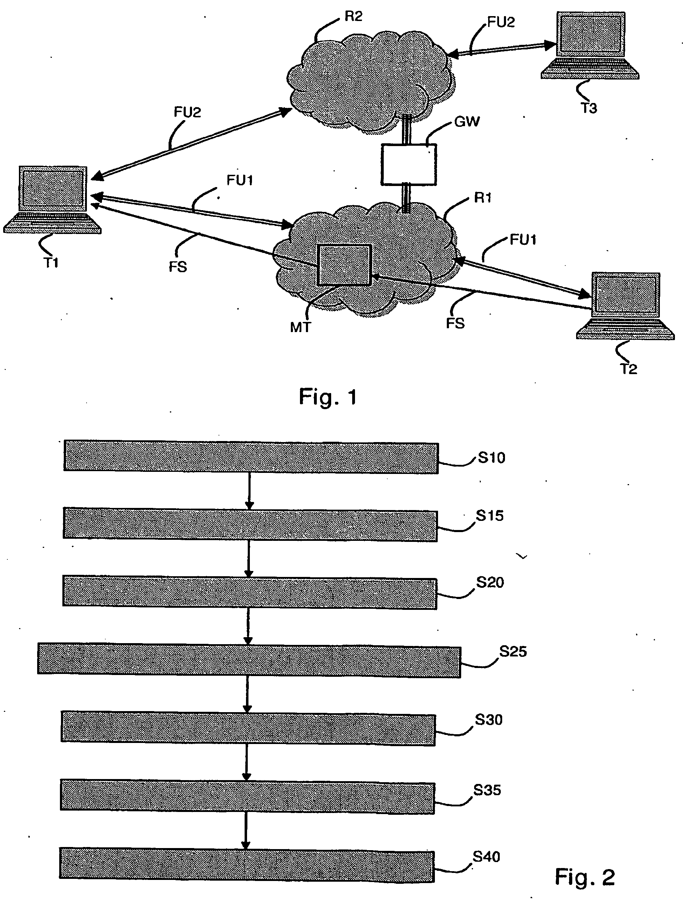

La figure 1 représente un système permettant la mise en oeuvre de l'invention. Ce système comprend trois terminaux T1, T2 et T3 et deux réseaux de communication R1 et R2. Il comprend en outre un module de transfert MT intégré dans un relais de communication du réseau R1, ainsi qu'une passerelle GW entre les réseaux R2 et R2.

Un premier flux utile FU1 est établi entre un premier terminal T1 et un deuxième terminal T2 via une première voie de communication et via un premier réseau R1 de communication. Le procédé de transfert vise à établir un deuxième flux utile FU2 entre le terminal T1 et un troisième terminal T3, ce deuxième flux étant destiné à venir en relais du premier flux utile FU1.

Le deuxième flux vient en relais du premier flux pour tout ou partie des données véhiculées via le flux utile FU1 : par exemple seulement pour les données de type son (dans ce cas on peut dire qu'il y a transfert uniquement d'un flux de téléphonie, ou de la partie téléphonie du flux de visiophonie), ou encore pour les données de type son et image (dans ce cas on peut dire qu'il y a transfert d'un flux de visiophonie dans son intégralité).

Le module de transfert MT est un module logiciel gérant le transfert de flux utile de communication. Ce module de transfert est soit intégré dans l'un des terminaux T1 ou T2, soit intégré dans un relais de communication indépendant physiquement des deux terminaux T1 et T2 et accessible via le réseau R1.

De manière avantageuse, un tel transfert peut être effectué sans intervention de l'utilisateur du premier terminal, notamment conformément à la demande de transfert transmise via la deuxième voie de communication et au moyen de données transmises via cette voie de communication.

Les étapes S10 à S40 du procédé selon l'invention sont maintenant décrites par référence à la figure 2.

Le terminal T1 établit S10 une session de communication et un flux utile FU1 avec le terminal T2 via le réseau R1 et via une première voie de communication. Ceci suppose que les terminaux T1 et T2 ont en commun un certain nombre de capacités C1-2. Le flux utile FU1 est par exemple un flux visiophonique transportant des données son et image.

L'utilisateur du terminal T2 décide de transférer le flux utile FU1 vers le terminal T3; sur commande de cet utilisateur, le terminal T2 tente d'établir S15 avec le module de transfert MT une session de communication pour la transmission d'un flux de données de transfert, dit flux de service FS2 ou flux auxiliaire.

Le module de transfert MT est configuré pour accepter toute demande d'établissement de session de communication en provenance du terminal T2, moyennant éventuellement des étapes préalables d'authentification, de contrôle de tarification, d'application de règle de priorité, etc. A la suite de ces étapes préalables, la session de communication est établie entre le module de transfert MT et le terminal T2 pour la transmission du flux de service FS2.

A l'étape S20, le terminal T2 envoie au module de transfert MT via le flux de service FS2 une demande de transfert vers le terminal T3.

Le module de transfert MT enregistre la demande de transfert puis vérifie S25 que les terminaux T1 et T3 ont en commun un certain nombre des capacités (C1-3) rendant possible l'établissement d'un flux.de communication entre ces deux terminaux.

Cette étape de comparaison des capacités a pour but non seulement de s'assurer que les capacités respectives des terminaux T1 et T3 en terme de protocoles supportés, codeurs, etc, permettent l'établissement d'une session de communication entre le terminal T1 et T3, mais également, par voie de conséquence, de déterminer, en fonction des capacités communes des terminaux T1 et T3, les paramètres de communication, notamment la norme de codage audio et/ou vidéo, utilisables ou à utiliser pour la mise en oeuvre de cette session.

Dans la négative le module de transfert MT signale au terminal T2 l'impossibilité d'effectuer le transfert demandé; dans le cas contraire, le module de transfert MT tente d'établir une session de communication pour la transmission d'un flux de service FS1 avec le terminal T1.

Le terminal T1 est configuré pour, dans le cas où le terminal T1 est disponible pour répondre à cette demande, accepter une telle demande d'établissement de session de communication en provenance du module de transfert MT et établir la session de communication avec le module de transfert MT pour la transmission du flux de service FS1.

En alternative, l'établissement de la session entre le terminal T1 et le module de transfert MT est effectué conditionnellement à une acceptation explicite de l'utilisateur du terminal (via une fenêtre de dialogue par exemple) et/ou conditionnellement au succès d'une procédure d'authentification destinée à vérifier que le terminal T1 et/ou le terminal T2 et/ou le module de transfert possède des droits suffisants pour établir une telle session.

Dans le cas où le terminal T1 est indisponible lors de la réception de la demande de transfert, une signalisation est prévue pour avertir le module de transfert et/ou le terminal T1 et/ou le terminal T2 de l'échec de la tentative d'établissement de la session.

Le flux de service FS1 et le flux de service FS2 sont ainsi établis via une deuxième voie de communication distincte et indépendante de la première voie de communication utilisée pour la transmission du premier flux utile.

Le module de transfert MT envoie à l'étape S30 une commande de transfert vers le terminal T1 via le flux de service FS1 destinée à déclencher l'activation du transfert à partir du terminal T1. Cette commande comprend les paramètres de connexion nécessaires au terminal T1 pour établir un flux de communication FU2 avec le terminal T3. Ces paramètres comprennent par exempte : le réseau à utiliser, le protocole de connexion à utiliser, le numéro à composer ou les paramètres IP de connexion (port de communication, adresse IP).

Selon un mode de réalisation, ces paramètres comprennent des données d'identification et/ou d'authentification lorsque celles-ci sont nécessaires à l'établissement du flux utile FU2 entre le terminal T1 et le terminal T3, par exemple lorsque ce flux est établi via un serveur d'accès. De la sorte, l'utilisateur du terminal n'a pas à saisir de telles données et le transfert de flux de communication peut s'effectuer de manière transparente pour cet utilisateur, notamment sans intervention de cet utilisateur.

Selon une première alternative, seule une partie de ces paramètres est envoyée au terminal T1 et l'utilisateur est invité à saisir les informations manquantes et/ou des informations complémentaires telles que données d'authentification.

Selon une deuxième alternative, seule une partie de ces paramètres est envoyée au terminal T1 et l'utilisateur est invité à présenter une carte à puce à un lecteur de carte du terminal T1 pour la lecture des informations manquantes et/ou d'informations complémentaires telles que données d'authentification, par exemple un mot de passe.

En option, pour chacune des trois alternatives, les paramètres envoyés sont confidentiels vis-à-vis de l'utilisateur du terminal T1, par exemple non visibles par cet utilisateur ou encryptés. De cette manière, l'utilisateur du terminal T1 ne sera pas en mesure d'établir par lui-même une connexion avec le terminal T3 mais uniquement sur demande de l'utilisateur du terminal T2. Il en résulte une régulation possible des appels vers le terminal T3.

Le terminal T1 rompt S35 le flux utile avec le terminal T2, si ce flux n'a pas déjà été interrompu par le terminal T2, puis tente d'établir une session de communication pour la transmission d'un flux.utile FU2 avec le terminal T3 via le réseau R2 et via une troisième voie de communication, selon les paramètres fournis par module de transfert MT.

Si le terminal T3 accepte la demande d'établissement de communication, un deuxième flux utile FU2 est alors établi entre les terminaux T1 et T3. Selon les capacités communes aux terminaux T1 et T3, ce deuxième flux utile permet de véhiculer soit des données de type son, soit des données de type image, soit d'autres données, soit encore une combinaison de ces types de données de base. En effet, la nature du deuxième flux utile va dépendre du résultat de la comparaison des capacités des terminaux T1 et T3. Par exemple, si les capacités communes de terminaux T1 et T3 sont uniquement des capacités d'établissement de flux vidéo (respectivement audio), seul un flux vidéo (respectivement audio) pourra être établi. Selon le cas, c'est donc une partie ou l'intégralité du flux utile FU1 qui sera remplacé par le flux utile FU2.

Dans le cas où le module de transfert est intégré dans le terminal T1 un seul flux de service est nécessaire: le flux FS2 entre le terminal T2 et le module de transfert MT du terminal T1. Dans une telle situation, le module de transfert MT est conçu pour pouvoir communiquer avec un module logiciel de gestion des sessions de communications du terminal T1.

De manière symétrique, dans le cas où le module de transfert est intégré dans le terminal T2 un seul flux de service est nécessaire: le flux FS1 entre le terminal T1 et le module de transfert MT du terminal T2. Dans une telle situation, le module de transfert MT est conçu pour pouvoir communiquer avec un module logiciel de gestion des sessions de communications du terminal T2.

En généralisant ces différents modes de réalisation, un flux de service FS est établi via une deuxième voie de communication entre le terminal T1 et le terminal T2, cette deuxième voie de communication permettant l'échange de données entre le terminal T1 et le terminal T2.

Le flux de service FS correspond:
- soit aux deux flux de service FS2 et FS1, dans le cas où le module de transfert MT est indépendant physiquement des terminaux T1 et T2 et constitue un relais de communication entre les terminaux T1 et T2 pour l'établissement du flux de service FS;
- soit au flux de service FS2, dans le cas le module de transfert MT est intégré dans le terminal T1;
- soit au flux de service FS1, dans le cas le module de transfert MT est intégré dans le terminal T2.

Les trois flux FU1, FU2 et FS, ainsi que les voies associées à ces flux, sont indépendants les uns des autres en ce qu'ils peuvent chacun être transportés par un réseau différent ou un réseau de type différent par rapport aux autres flux. Par ailleurs, ils ne sont pas synchronisés les uns par rapport aux autres.

Dans le cas où les réseaux R1 et R2 sont différents, il est supposé que le terminal T1 dispose des ressources matérielles et logicielles nécessaires pour accéder à la fois au réseau R1 et au réseau R2.

Si les ressources dont dispose le terminal T1 ne lui permettent pas de maintenir simultanément deux sessions de communication (une session pour le flux utile FU1 et une session pour le flux utile FU2), celui-ci devra interrompre le flux utile FU1 avant d'établir le flux utile FU2. Dans le cas contraire, par exemple dans le cas où le terminal T1 est ordinateur personnel capable de maintenir simultanément deux flux vocaux en mode VoIP (Voice over IP), le terminal T1 peut attendre l'établissement complet du flux utile FU2 avant de rompre le flux utile FU1. L'étape d'établissement du flux utile FU2 peut donc être postérieure ou antérieure à l'étape d'interruption du flux utile FU1.

L'évaluation sur la compatibilité entre les terminaux T1 et T3 (évaluation des capacités C1-3) est de préférence effectuée par le module de transfert MT, de manière à éviter de lancer une procédure de transfert vouée à l'échec. Cela suppose que le module de transfert MT détermine au préalable les capacités du terminal T3 et les compare à celles du terminal T1.

Les capacités du terminal T3 peuvent soit être déterminées par interrogation du terminal T3, par exemple, via un agent logiciel SNMP ("Simple Network Management Protocol") résidant dans le terminal. T3, soit être obtenues par consultation d'une base de données stockant préalablement les capacités des terminaux vers lesquels de tels transferts sont susceptibles d'être effectués.

En alternative, le module de transfert MT n'effectue pas une telle évaluation, et le terminal T1 tente d'établir une connexion avec les paramètres dont il dispose et rend compte au module de transfert MT du succès ou de l'échec de l'établissement de.la communication. Dans ce cas, le module de transfert MT retransmet ces informations au terminal T2.

Dans un mode de réalisation particulier, le module de transfert MT est configuré pour dialoguer avec le terminal T1 et le terminal T2 via le flux de service FS1, FS2 ou FS, de manière à suivre le déroulement du transfert et à en informer l'utilisateur du terminal T2.

Le procédé selon l'invention s'applique à différents scénarii d'usage.

Selon un exemple de scénario, un patient est en communication avec un centre hospitalier (ou centre d'appel) et le centre hospitalier décide de transférer cette communication vers un médecin de garde. Le patient est équipé d'un terminal T1 sous la forme d'un micro-ordinateur accédant au réseau RTC pour l'établissement d'un flux de téléphonie et disposant en outre d'un modem ADSL pour l'établissement d'un flux de visiophonie avec le centre hospitalier. Le centre hospitalier est équipé d'un terminal T2, également sous la forme d'un micro-ordinateur disposant de la même configuration que le terminal T1. Le médecin de garde ne dispose quant à lui que d'un téléphone GSM constituant le terminal T3.

Lorsque le patient établit la communication vers le centre hospitalier, le terminal T1 établit un flux téléphonique via le réseau RTC avec le terminal. T2 du centre hospitalier. Un permanencier du centre hospitalier répond et fait une rapide première analyse de la motivation de l'appel du patient. Le permanencier établit ensuite au moyen de son terminal T2 un flux vidéo, permettant la mise en relation par visioconférence avec le patient.

Après un échange avec le patient, le permanencier décide de transférer l'appel du patient vers un médecin de garde. Il clique par exemple sur un icone associé aux coordonnées du médecin pour déclencher le transfert. Un module de transfert, par exemple sous forme de serveur sur le réseau IP, vu à la fois par les terminaux T1 et T2, envoie au terminal T1 le numéro de téléphone de ce médecin via un flux de service.

Le terminal T1 interrompt la visioconférence avec le permanencier, puis compose le numéro de téléphone du médecin de garde. Le téléphone du médecin de garde sonne. Il répond alors au patient sans que ce dernier n'ait eu d'action à faire. Le flux de communication entre le médecin de garde et le patient est dans ce cas uniquement un flux de téléphonie.

Dans une variante de ce scénario, le terminal T3 est un téléphone mobile de troisième génération permettant d'établir une visioconférence avec le patient. Dans ce cas, le flux visiophonique entre le terminal T1 et le terminal T2 est transférable entièrement. En effet, le terminal T1 peut lancer une session de visiophonie selon la norme H264M en utilisant son modem ADSL. Le flux de communication entre le médecin de garde et le patient est dans ce cas un flux de visiophonie.

Le procédé permet également de maintenir confidentiels vis-à-vis de l'utilisateur les paramètres de connexion au terminal T3. Cela évite que les patients appellent à l'avenir le médecin de garde sur son portable sans passer par le centre hospitalier ou le centre d'appel. Un filtrage des appels effectués vers le médecin de garde est donc réalisé.

Le procédé selon l'invention est indépendant des réseaux de télécommunications intervenant et ne nécessite pas de faire appel à des équipements spécialisés. En outre, il s'adapte aux capacités des terminaux pour transférer selon le cas la partie téléphonie, visiophonie ou données du flux utile de communication.

## Revendications

1. Procédé comprenant les étapes suivantes :
- établissement d'une première session de communication avec établissement (S10) d'un premier flux (FU1) via une première voie de communication entre un premier terminal (T1) et un deuxième terminal (T2),
- établissement d'une deuxième session de communication pour la transmission d'un flux de service, avec ouverture (S15) d'une deuxième voie de communication entre le deuxième terminal (T2) et le premier terminal (T1) via laquelle est envoyée, du deuxième terminal (T2) au premier terminal (T1), une demande d'établissement d'un flux (FU2) de communication entre le premier terminal (T1) et un troisième terminal (T3) via une troisième voie de communication, le flux de service étant indépendant du premier flux,
- établissement d'une troisième session de communication avec établissement, conformément à ladite demande (S40), d'un flux (FU2) de communication, dit deuxième flux, entre le premier terminal (T1) et le troisième terminal (T3), cette étape d'établissement étant destinée à être exécutée dans le cas où il a été vérifié, en fonction des capacités respectives du premier et du troisième terminal, qu'un établissement d'un tel flux de communication est possible entre le premier terminal et le troisième terminal, le deuxième flux étant indépendant du premier flux et établi via un réseau différent ou d'un type différent du réseau utilisé pour établir le premier flux,
- une étape d'interruption (S35) du premier flux (FU1).

2. Procédé selon la revendication 1, comprenant une étape de détermination de paramètres de codage audio et/ou vidéo à utiliser pour établir le deuxième flux.

3. Procédé selon l'une quelconque des revendications 1 à 2, comprenant une étape d'envoi, au premier terminal, à travers la deuxième voie de communication, de données d'authentification requises pour l'établissement du deuxième flux.

4. Procédé selon l'une quelconque des revendications 1 à 3, dans lequel la deuxième voie de communication est établie indépendamment de la première voie de communication.

5. Procédé selon l'une quelconque des revendications 1 à 4, comprenant une étape consistant à envoyer au premier terminal (T1), via la deuxième voie de communication, de paramètres de connexion nécessaires à l'établissement du deuxième flux.

6. Procédé selon l'une quelconque des revendications 1 à 5, dans lequel la deuxième voie de communication est ouverte par l'intermédiaire d'un relais (MT) de communication entre le premier terminal (T1) et le deuxième terminal (T2).

7. Module (MT) apte à coopérer avec un premier terminal (T1) et un deuxième terminal (T2) ayant établi entre eux un premier flux (FU1) de communication, ledit module comprenant,
- des moyens pour établir au moins une deuxième session de communication pour la transmission d'au moins un flux de service (FS1, FS2) avec ouverture d'une première voie de communication avec le premier terminal (T1) et d'une deuxième voie de communication avec le deuxième terminal (T2), le flux de service étant indépendant du premier flux ;
- des moyens pour recevoir (S20) du deuxième terminal (T2) via la deuxième voie de communication une demande d'établissement d'un flux (FU2) de communication, dit deuxième flux, entre le premier terminal (T1) et un troisième terminal (T3) via une troisième voie de communication ;
- des moyens pour transférer (S20) ladite demande au premier terminal (T1) via la première voie de communication et commander l'établissement conformément à ladite demande dudit deuxième flux, le deuxième flux étant indépendant du premier flux et à établir via un réseau différent ou d'un type différent du réseau utilisé pour établir le premier flux ;
- des moyens pour vérifier les capacités respectives du premier et du troisième terminal afin de déterminer si un établissement d'un tel deuxième flux est possible entre le premier terminal (T1) et le troisième terminal (T3) ;
- des moyens d'interruption (S35) du premier flux (FU1).

8. Terminal (T1), dit premier terminal, comprenant
- des moyens pour établir (S10) une première session de communication avec établissement avec un deuxième terminal (T2) d'un premier flux (FU1) de communication via une première voie de communication ;
- des moyens pour établir une deuxième session de communication pour la transmission d'un flux de service avec ouverture (S15) d'une deuxième voie de communication avec un deuxième terminal (T2), le flux de service étant indépendant du premier flux ;
- des moyens pour recevoir (S20) du deuxième terminal (T2) via la deuxième voie de communication une demande d'établissement d'un flux (FU2) de communication entre le premier terminal (T1) et un troisième terminal (T3) via une troisième voie de communication ;
- des moyens pour établir une troisième session de communication avec établissement, conformément à ladite demande (S40), d'un flux (FU2) de communication, dit deuxième flux, avec le troisième terminal (T3), ces moyens étant destinés à être activés dans le cas où il a été vérifié, en fonction des capacités respectives du premier et de troisième terminal, que l'établissement d'un tel flux de communication est possible entre le premier terminal et le troisième terminal, le deuxième flux étant indépendant du premier flux et établi via un réseau différent ou d'un type différent du réseau utilisé pour établir le premier flux ;
- des moyens d'interruption (S35) du premier flux (FU1).

9. Terminal (T2), dit deuxième terminal, apte à coopérer avec un premier terminal selon la revendication 8, le deuxième terminal comprenant,
- des moyens pour établir (S10) une première session de communication avec établissement avec le premier terminal (T1) d'un premier flux (FU1) de communication via une première voie de communication ;
- des moyens pour établir une deuxième session de communication pour la transmission d'un flux de service avec ouverture (S15) d'une deuxième voie de communication avec le premier terminal (T1), le flux de service étant indépendant du premier flux ;
- des moyens pour envoyer (S20) au premier terminal (T1) via la deuxième voie de communication, une demande d'établissement d'une troisième session de communication pour établir un flux (FU2) de communication, dit deuxième flux, entre le premier terminal (T1) et un troisième terminal (T3) via une troisième voie de communication, le deuxième flux étant indépendant du premier flux et à établir via un réseau différent ou d'un type différent du réseau utilisé pour établir le premier flux ;
- un module (MT) pour vérifier les capacités respectives du premier et du troisième terminal, afin de déterminer si l'établissement d'un flux (FU2) de communication entre le premier terminal (T1) et le troisième terminal (T3) est possible ;
- des moyens d'interruption (S35) du premier flux (FU1).

## Patentansprüche

1. Verfahren, umfassend die folgenden Schritte:
- Aufbauen einer ersten Kommunikationssitzung mit dem Aufbauen (S10) eines ersten Stroms (FU1) über einen ersten Kommunikationspfad zwischen einem ersten Endgerät (T1) und einem zweiten Endgerät (T2),
- Aufbauen einer zweiten Kommunikationssitzung für das Übertragen eines Servicestroms mit dem Öffnen (S15) eines zweiten Kommunikationspfades zwischen dem zweiten Endgerät (T2) und dem ersten Endgerät (T1), über den von dem zweiten Endgerät (T2) zu dem ersten Endgerät (T1) eine Anfrage zum Aufbauen eines Kommunikationsstromes (FU2) zwischen dem ersten Endgerät (T1) und einem dritten Endgerät (T3) über einen dritten Kommunikationspfad gesendet wird, wobei der Servicestrom von dem ersten Strom unabhängig ist,
- Aufbauen einer dritten Kommunikationssitzung mit dem Aufbauen gemäß der Anfrage (S40) eines Kommunikationsstroms (FU2), dem sogenannten zweiten Strom, zwischen dem ersten Endgerät (T1) und dem dritten Endgerät (T3), wobei dieser Schritt des Aufbauens dazu bestimmt ist, dann ausgeführt zu werden, wenn, je nach den jeweiligen Fähigkeiten des ersten und zweiten Endgeräts überprüft worden ist, dass ein Aufbauen eines derartigen Kommunikationsstroms zwischen dem ersten Endgerät und dem dritten Endgerät möglich ist, wobei der zweite Strom von dem ersten Strom unabhängig ist und über ein anderes Netz oder eine andere Art von Netz als das Netz, das verwendet wird, um den ersten Strom aufzubauen, übertragen wird,
- einen Schritt des Unterbrechens (S35) des ersten Stroms (FU1).

2. Verfahren nach Anspruch 1, umfassend einen Schritt des Bestimmens von Audio- und/oder Videokodierungsparametern, die zu verwenden sind, um den zweiten Strom aufzubauen.

3. Verfahren nach einem der Ansprüche 1 bis 2, umfassend einen Schritt des Sendens von Authentifizierungsdaten, die zum Aufbauen des zweiten Stroms angefordert werden, an das erste Endgerät über den zweiten Kommunikationspfad.

4. Verfahren nach einem der Ansprüche 1 bis 3, wobei der zweite Kommunikationspfad unabhängig von dem ersten Kommunikationspfad aufgebaut wird.

5. Verfahren nach einem der Ansprüche 1 bis 4, umfassend einen Schritt, der darin besteht, dem ersten Endgerät (T1) über den zweiten Kommunikationspfad Verbindungsparameter zu senden, die zum Aufbauen des zweiten Stroms erforderlich sind.

6. Verfahren nach einem der Ansprüche 1 bis 5, wobei der zweite Kommunikationspfad über ein Kommunikationsrelais (MT) zwischen dem ersten Endgerät (T1) und dem zweiten Endgerät (T2) geöffnet wird.

7. Modul (MT), das geeignet ist, mit einem ersten Endgerät (T1) und einem zweiten Endgerät (T2) zusammenzuwirken, das zwischen ihnen einen ersten Kommunikationsstrom (FU1) aufgebaut hat, wobei das Modul Folgendes aufweist,
- Mittel zum Aufbauen von mindestens einer zweiten Kommunikationssitzung zum Übertragen von mindestens einem Servicestrom (FS1, FS2) mit dem Öffnen eines ersten Kommunikationspfades mit dem ersten Endgerät (T1) und eines zweiten Kommunikationspfades mit dem zweiten Endgerät (T2), wobei der Servicestrom von dem ersten Strom unabhängig ist;
- Mittel zum Empfangen (S20) von dem zweiten Endgerät (T2) über den zweiten Kommunikationspfad einer Anfrage zum Aufbauen eines Kommunikationsstromes (FU2), dem sogenannten zweiten Strom, zwischen dem ersten Endgerät (T1) und einem dritten Endgerät (T3) über einen dritten Kommunikationspfad;
- Mittel zum Übertragen (S20) der Anfrage an das erste Endgerät (T1) über den ersten Kommunikationspfad und zum Steuern des Aufbauens gemäß der Anfrage des zweiten Stroms, wobei der zweite Strom von dem ersten Strom unabhängig ist und über ein anderes Netz oder eine andere Art von Netz als das Netz, das verwendet wird, um den ersten Strom aufzubauen, aufzubauen ist;
- Mittel zum Überprüfen der jeweiligen Fähigkeiten des ersten und zweiten Endgeräts, um zu bestimmen, ob ein Aufbauen eines derartigen zweiten Stroms zwischen dem ersten Endgerät (T1) und dem dritten Endgerät (T3) möglich ist;
- Mittel zum Unterbrechen (S35) des ersten Stroms (FU1).

8. Endgerät (T1), das sogenannte erste Endgerät, umfassend
- Mittel zum Aufbauen (S10) einer ersten Kommunikationssitzung mit dem Aufbauen mit einem zweiten Endgerät (T2) eines ersten Kommunikationsstroms (FU1) über einen ersten Kommunikationspfad;
- Mittel zum Aufbauen einer zweiten Kommunikationssitzung zum Übertragen eines Servicestroms mit dem Öffnen (S15) eines zweiten Kommunikationspfades mit dem zweiten Endgerät (T2), wobei der Servicestrom von dem ersten Strom unabhängig ist;
- Mittel zum Empfangen (S20) von dem zweiten Endgerät (T2) über den zweiten Kommunikationspfad einer Anfrage zum Aufbauen eines Kommunikationsstromes (FU2) zwischen dem ersten Endgerät (T1) und einem dritten Endgerät (T3) über einen dritten Kommunikationspfad;
- Mittel zum Aufbauen einer dritten Kommunikationssitzung mit dem Aufbauen gemäß der Anfrage (S40) eines Kommunikationsstroms (FU2), dem sogenannten zweiten Strom, mit dem dritten Endgerät (T3), wobei diese Mittel dazu bestimmt sind, dann aktiviert zu werden, wenn, je nach den jeweiligen Fähigkeiten des ersten und dritten Endgeräts überprüft worden ist, dass das Aufbauen eines derartigen Kommunikationsstroms zwischen dem ersten Endgerät und dem dritten Endgerät möglich ist, wobei der zweite Strom von dem ersten Strom unabhängig ist und über ein anderes Netz oder eine andere Art von Netz als das Netz, das verwendet wird, um den ersten Strom aufzubauen, aufgebaut ist;
- Mittel zum Unterbrechen (S35) des ersten Stroms (FU1).

9. Endgerät (T2), das sogenannte zweite Endgerät, das geeignet ist, mit einem ersten Endgerät nach Anspruch 8 zusammenzuwirken, wobei das zweite Endgerät Folgendes aufweist,
- Mittel zum Aufbauen (S10) einer ersten Kommunikationssitzung mit dem Aufbauen mit dem ersten Endgerät (T1) eines ersten Kommunikationsstroms (FU1) über einen ersten Kommunikationspfad;
- Mittel zum Aufbauen einer zweiten Kommunikationssitzung zum Übertragen eines Servicestroms mit dem Öffnen (S15) eines zweiten Kommunikationspfades mit dem ersten Endgerät (T1), wobei der Servicestrom von dem ersten Strom unabhängig ist;
- Mittel zum Senden (S20) an das erste Endgerät (T1) über den zweiten Kommunikationspfad einer Anfrage zum Aufbauen einer dritten Kommunikationssitzung, um einen Kommunikationsstrom (FU2), den sogenannten zweiten Strom, zwischen dem ersten Endgerät (T1) und einem dritten Endgerät (T3) über einen dritten Kommunikationspfad aufzubauen, wobei der zweite Strom von dem ersten Strom unabhängig ist und über ein anderes Netz oder eine andere Art von Netz als das Netz, das verwendet wird, um den ersten Strom aufzubauen, aufzubauen ist;
- ein Modul (MT) zum Überprüfen der jeweiligen Fähigkeiten des ersten und dritten Endgeräts, um zu bestimmen, ob ein Aufbauen eines Kommunikationsstroms (FU2) zwischen dem ersten Endgerät (T1) und dem dritten Endgerät (T3) möglich ist;
- Mittel zum Unterbrechen (S35) des ersten Stroms (FU1).

## Claims

1. Method comprising the following steps:
- set-up of a first communication session with the set-up (S10) of a first stream (FU1) via a first communication channel between a first terminal (T1) and a second terminal (T2);
- set-up of a second communication session for the transmission of a service stream, with the opening (S15) of a second communication channel between the second terminal (T2) and the first terminal (T1), by means of which an set-up request for a communication stream (FU2) between the first terminal (T1) and a third terminal (T3) via a third communication channel is sent from the second terminal (T2) to the first terminal (T1), the service stream being independent of the first stream;
- set-up of a third communication session with the set-up, in accordance with said request (S40), of a communication stream (FU2), referred to as the second stream, between the first terminal (T1) and the third terminal (T3), this set-up step being intended to be carried out when it has been verified, according to the respective capacities of the first and third terminals, that set-up of such a communication stream is possible between the first terminal and the third terminal, the second stream being independent of the first stream and set up via a different network or from a different type from the network used for setting up the first stream;
- an interruption step (S35) for the first stream (FU1).

2. Method according to Claim 1, comprising a determination step for audio and/or video coding parameters to be used for setting up the second stream.

3. Method according to either one of Claims 1 and 2, comprising a step for sending, to the first terminal, through the second communication channel, authentication data required for the set-up of the second stream.

4. Method according to any one of Claims 1 to 3, in which the second communication channel is set up independently of the first communication channel.

5. Method according to any one of Claims 1 to 4, comprising a step consisting of sending to the first terminal (T1), via the second communication channel, connection parameters necessary for the set-up of the second stream.

6. Method according to any one of Claims 1 to 5, in which the second communication channel is opened by means of a communication relay (MT) between the first terminal (T1) and the second terminal (T2).

7. Module (MT) capable of cooperating with a first terminal (T1) and a second terminal (T2) having set up a first communication stream (FU1) between them, said module comprising:
- means for setting up at least one second communication session for the transmission of at least one service stream (FS1, FS2), with the opening of a first communication channel with the first terminal (T1) and of a second communication channel with the second terminal (T2), the service stream being independent of the first stream;
- means for receiving (S20), from the second terminal (T2) via the second communication channel, an set-up request for a communication stream (FU2), referred to as the second stream, between the first terminal (T1) and a third terminal (T3) via a third communication channel;
- means for transferring (S20) said request to the first terminal (1) via the first communication channel and ordering the set-up of said second stream in accordance with said request, the second stream being independent of the first stream and intended to be set up via a different network or from a different type from the network used for setting up the first stream;
- means for verifying the respective capacities of the first and third terminals in order to determine whether set-up of such a second stream is possible between the first terminal (T1) and the third terminal (T3);
- interruption means (S35) for the first stream (FU1).

8. Terminal (T1), referred to as the first terminal, comprising:
- means for setting up (S10) a first communication session with the set-up of a first communication stream (FU1) with a second terminal (T2) via a first communication channel;
- means for setting up a second communication session for the transmission of a service stream, with the opening (S15) of a second communication channel with a second terminal (T2), the service stream being independent of the first stream;
- means for receiving (S20), from the second terminal (T2) via the second communication channel, an set-up request for a communication stream (FU2) between the first terminal (T1) and a third terminal (T3) via a third communication channel;
- means for setting up a third communication session with the set-up, in accordance with said request (S40), of a communication stream (FU2), referred to as the second stream, with the third terminal (T3), these means being intended to be activated when it has been verified, according to the respective capacities of the first and third terminals, that the set-up of such a communication stream is possible between the first terminal and the third terminal, the second stream being independent of the first stream and set up via a different network or from a different type from the network used for setting up the first stream;
- interruption means (S35) for the first stream (FU1).

9. Terminal (T2), referred to as the second terminal, capable of cooperating with a first terminal according to Claim 8, the second terminal comprising:
- means for setting up (S10) a first communication session with the set-up of a first communication stream (FU1) with the first terminal (T1) via a first communication channel;
- means for setting up a second communication session for the transmission of a service stream, with the opening (S15) of a second communication channel with the first terminal (T1), the service stream being independent of the first stream;
- means for sending (S20) to the first terminal (T1), via the second communication channel, an set-up request for a third communication session for setting up a communication stream (FU2), referred to as the second stream, between the first terminal (T1) and a third terminal (T3) via a third communication channel, the second stream being independent of the first stream and intended to be set up via a different network or from a different type from the network used for setting up the first stream;
- a module (MT) for verifying the respective capacities of the first and third terminals in order to determine whether the set-up of a communication stream (FU2) between the first terminal (T1) and the third terminal (T3) is possible;
- interruption means (S35) for the first stream (FU1).
